# EUROPÄISCHE PATENTSCHRIFT

(11) **EP 3 712 184 B1**
(45) Veröffentlichungstag und Bekanntmachung des Hinweises auf die Patenterteilung: **26.04.2023**
(21) Anmeldenummer: 20163055.5
(22) Anmeldetag: 13.03.2020
(51) Int. Cl.: C08F 222/10, C08F 283/10, C09J 4/00, C09J 4/06, C08K 5/103, C08F 290/06, C08K 5/14

(54) **BEFESTIGUNGSSYSTEM UMFASSEND EINE HÄRTERKOMPONENTE MIT MINDESTENS EINEM BENZOAT**
FASTENING SYSTEM COMPRISING A CURING COMPONENT WITH AT LEAST ONE BENZOATE
SYSTÈME DE FIXATION COMPRENANT UN COMPOSANT DURCISSEUR COMPORTANT AU MOINS UN BENZOATE

(30) Priorität: 18.03.2019 DE 102019106854
(43) Veröffentlichungstag der Anmeldung: 23.09.2020
(73) Patentinhaber: MKT Metall-Kunststoff-Technik GmbH & Co. KG, 67685 Weilerbach (DE)
(72) Erfinder: HOFFMANN, Werner, 67657 Kaiserslautern (DE); HANZ, Florian, 66907 Glan-Münchweiler (DE)
(74) Vertreter: Kutzenberger Wolff & Partner

(56) Entgegenhaltungen:
- EP-A1- 2 985 318
- EP-A1- 3 299 351
- WO-A1-2020/007820
- CN-A- 108 264 858

## Beschreibung

Die Erfindung betrifft ein Befestigungssystem umfassend zwei getrennt voneinander vorliegende Komponenten (A) und (B). Die Komponente (A) enthält mindestens ein Harz, während die als Härter fungierende Komponente (B) mindestens ein Peroxid, welches Dibenzoylperoxid ist, und mindestens ein Benzoat ausgewählt aus Ethylenglykoldibenzoat und Diethylenglykoldibenzoat enthält. Weiterhin betrifft die Erfindung die Verwendung eines solchen Befestigungssystems, beispielsweise zum Einbringen von Verankerungsmitteln in Löcher oder Spalten, insbesondere in Bohrlöcher und/oder Betonlöcher. Ein weiterer Gegenstand der vorliegenden Erfindung ist somit auch ein Verfahren zur Befestigung von Verankerungsmitteln in Löchern oder Spalten. Ebenso ist die Verwendung von mindestens einem Benzoat ausgewählt aus Ethylenglykoldibenzoat und Diethylenglykoldibenzoat zur Herstellung des erfindungsgemäßen Befestigungssystems ein weiterer Gegenstand der vorliegenden Erfindung.

Befestigungssysteme, die insbesondere durch Aushärten einer Harzkomponente dazu geeignet sind, Verankerungsmittel wie Schrauben, beispielsweise in einem Betonloch, fest zu verankern, sind in der Praxis weit verbreitet. Solche Befestigungssysteme werden in der Praxis aufgrund des während der Anwendung stattfindenden Aushärtungsvorganges auch als "chemische Dübel" bezeichnet, ebenso ist eine Bezeichnung als beispielsweise "(Injektions-)Befestigungsmörtelsystem" und/oder "zweikomponentige Befestigungsmörtel" bzw. "mehrkomponentige Befestigungsmörtel" durchaus gebräuchlich. Um zu gewährleisten, dass das chemische Aushärten der Befestigungssysteme erst während der gewünschten Anwendung erfolgt (und nicht bereits während der Herstellung oder der Lagerung), werden diese Befestigungssysteme in der Regel in der Praxis als zwei- oder mehrkomponentige Systeme angeboten, wobei mindestens zwei dieser Komponenten getrennt voneinander bereitgestellt werden. Die erste Komponente ist die sogenannte "Harzkomponente", die wiederum getrennt von der zweiten Komponente, die auch als "Härterkomponente" bezeichnet wird, aufbewahrt werden muss. Erst durch das Zusammenbringen dieser beiden Komponenten sowie gegebenenfalls vorhandener weiterer Komponenten kann der gewünschte Aushärtungsvorgang des Harzes, also der ersten Komponente, durchgeführt werden.

Weitverbreitet sind radikalisch aushärtende Harzkomponenten. Demzufolge enthält eine entsprechende Härterkomponente in aller Regel zwingend einen Radikalstarter, insbesondere in Form von Peroxiden, um das Aushärten der Harzkomponente zu ermöglichen. Um zu gewährleisten, dass auch die Härterkomponente als solche lagerstabil ist, enthält die Härterkomponente in der Praxis in der Regel keinen unverdünnten Initiator (beispielsweise in Form eines Radikalstarters wie Peroxide). Stattdessen sind in der Härterkomponente neben dem eigentlichen Initiator weitere Bestandteile/Verbindungen enthalten, die eine stabile Lagerung nicht nur der Härterkomponente, sondern letztendlich auch des gesamten Befestigungssystems ermöglichen. Solche zusätzlichen in der Regel zumindest in der Härterkomponente enthaltenen Verbindungen können Füllstoffe und/oder Phlegmatisierungsmittel sein.

Sofern die Härterkomponente auf Peroxiden als Initiator (für die Harzaushärtung) beruht, ist es in der Praxis weitverbreitet, dem Peroxid Phthalate wie beispielsweise Dicyclohexylphthalat beizumischen, um eine Stabilisierung der Härterkomponente zu ermöglichen. Die Verwendung von Phthalaten ist jedoch aus mehrfacher Hinsicht problematisch. Phthalate lassen sich nur relativ schwierig mit Peroxiden verarbeiten, insbesondere hinsichtlich des Abfüllens in Glaspatronen. Insbesondere jedoch sind Phthalate wegen ihrer gesundheitlichen Nachteile problematisch. Beispielshaft wird hier auf Dicyclohexylphthalat hingewiesen, das seit dem 17. Juni 2017 in die Liste der besonderes besorgniserregenden Stoffe mit aufgenommen worden ist. Demzufolge müssen in den relevanten Sicherheitsdatenblättern bei der Verwendung von phthalathaltigen Verbindungen nunmehr das Symbol "GHS08" bzw. das Signalwort "Gefahr" und der Hazard-Satz "H360D" (kann das Kind im Mutterleib schädigen) verwendet werden, was ab einem Gehalt von mehr als 0,1 %, bezogen auf die Gesamtmasse, notwendig ist. Diese Kennzeichnung ist auch auf der Verpackung anzubringen und stellt somit ein leicht erkennbares Kriterium dar, ein entsprechendes Produkt zu meiden bzw. nicht zu kaufen.

Durch diese Kennzeichnung unterliegt somit ein entsprechendes Produkt Handelsbeschränkungen, beispielsweise infolge der Chemikalienverbotsverordnung (ChemVerbotsV). Diese Verordnung schreibt unter anderem für den Verkäufer eine Schulung über die Gefahren beim Umgang mit solchen Stoffen vor. Ebenso ist der Verkäufer gezwungen, die potentiellen Käufer über die Gefahren beim Umgang mit diesen Stoffen zu unterrichten. Weiterhin ist es erforderlich, ein Abgabebuch zu führen, ein Verkauf an Privatleute über das Internet ist ebenso wenig möglich. Darüber hinaus ist zu berücksichtigen, dass auch beim Entfernen von bereits angebrachten oder noch zu verarbeitenden phthalathaltigen Befestigungssystemen eine ungewollte Freisetzung von solchen Phthalaten bei zeitlich auch sehr viel späteren Abbrucharbeiten zu erwarten ist.

DE-A 10 2014 103 920 betrifft mehrkomponentige Kunstharz-Verklebungsmittel für den Befestigungsbereich, insbesondere zum Verkleben eines Verankerungselements in einem Bohrloch oder Spalt. Als Verbindungsmittel wird zwingend ein biogener, nicht reaktiver, bei der Anwendungstemperatur flüssiger Verdünner verwendet (beispielsweise ein pflanzliches Öl wie Rizinusöl oder Glyzerin). Der biogene, nicht reaktive und bei der Anwendungstemperatur flüssige Verdünner kann entweder der Kunstharzkomponente oder der Härterkomponente des entsprechenden mehrkomponentigen Systems zugesetzt werden. Die Härterkomponente kann als Initiator auch Peroxid enthalten. Aus der zugehörigen Beschreibung dieses Dokumentes ist ersichtlich, dass zur Stabilisierung eines auf Peroxid basierenden Härters auch Phlegmatisierungsmittel wie Phthalate eingesetzt werden können. Die in diesem Dokument offenbarten mehrkomponentigen Systeme betreffend vordergründig Kartuschensysteme, bei denen die Härtekomponente durch die Zugabe eines biogenen flüssigen Verdünners geschmeidiger gemacht werden soll. Die in diesem Dokument offenbarten (konkreten) Befestigungssysteme sind in ihrer Härterkomponente allesamt zusätzlich mit Wasser phlegmatisiert. Die Verwendung von Wasser als Phlegmatisierungsmittel ist in der Praxis jedoch nachteilig, weil die Anwesenheit von Wasser bei der konkreten Anwendung des entsprechenden Systems das Mischen der jeweiligen Harzkomponente mit der jeweiligen Härterkomponente erschwert. Oft trennt sich beim Mischen das Wasser auch ab, was den molekularen Verbund bei der Anwendung stört.

EP-B 2 640 675 betrifft eine Zweikomponenten-Mörtelmasse mit einer härtbaren Harzkomponente mit jeweils einem speziellen Gehalt an mindestens einem radikalisch polymerisierbaren Harz, Füllstoffen, Beschleunigern, Stabilisatoren und gegebenenfalls weiteren üblichen Mörtelbestandteilen und einer davon reaktionsinhibierend getrennt angeordneten Härterkomponente mit einem Gehalt an mindestens einem Peroxid für die chemische Befestigung von Verankerungsmitteln in Bohrlöchern sowie ihre Verwendung zur chemischen Befestigung von Verankerungsmitteln in Bohrlöchern. Die Harz- und/oder die Härterkomponente der entsprechenden Zweikomponenten-Mörtelmassen dieses Dokumentes können unter anderem übliche Füllstoffe wie Quarz, Sand, pyrogene Kieselsäure, Kreide oder Zement enthalten. Um das in der Härterkomponente enthaltene Peroxid zu stabilisieren, wird gemäß EP-B 2 640 675 Wasser als Phlegmatisierungsmittel zugesetzt.

WO 2015/000807 betriff einen radikalisch härtbaren Reaktivverdünner für die chemische Befestigungstechnik. Diese Reaktivverdünner sind ausgewählt aus Oligoalkylenglycol-di(meth)acrylaten mit im Mittel mehr als zwei Alkylenglycoleinheiten je Molekül und alkoxylierten Tri-, Tetra- und Pentamethacrylaten. Die Reaktivverdünner sind Bestandteil der Harzkomponente eines entsprechenden radikalisch härtbaren Kunstharz-Befestigungssystems. Die Härterkomponente kann unter anderem Peroxide enthalten, die wiederum durch geeignete Zusätze wie Phthalate phlegmatisiert werden.

Ein zwei- oder mehrkomponentiger Befestigungsmörtel auf Basis eines radikalisch härtenden ungesättigten Reaktionsharzes zum Einmörteln von Verankerungsmitteln in Löcher oder Spalten ist in WO 2011/072789 offenbart. Dieser Befestigungsmörtel enthält zwingend Silane, die zur Teilnahme an der Polymerisierung mit einem Kunstharz auf Basis radikalisch härtender ungesättigter Reaktionsharze befähigte reaktive Gruppen aufweisen. Die Härterkomponente basiert wiederum auf Peroxiden, die zur Phlegmatisierung geeignete Zusätze wie Phthalte enthalten.

CN 108 264 858 A offenbart einen AB-Klebstoff zum Verbinden von Acrylfolien und ein Herstellungsverfahren dafür. Der AB-Klebstoff ist ein A- und B-Zweikomponenten-Acrylfolienklebeklebstoff und wird durch Mischen der Komponente A und der Komponente B in einem Massenverhältnis von 10:1 erhalten.

EP 3 299 351 A1 betrifft eine Zweikomponenten-Mörtelmasse mit einer Harzkomponente (A), die als härtbaren Bestandteil mindestens ein radikalisch härtbares Harz enthält, und einer Härterkomponente (B), die ein Härtungsmittel für das radikalisch härtbare Harz der Harzkomponente (A) enthält, wobei die Harzkomponente (A) und/oder die Härterkomponente (B) als weiteren Bestandteil mindestens einen anorganischen Zusatzstoff enthält.

EP 2 985 318 A1 betrifft eine härtbare (Kunstharz-)Masse bzw. ein Befestigungskunstmörtelsystem zum Einmörteln von Verankerungsmitteln in Löcher oder Spalten beinhaltend ein oder mehrere härtende Reaktivharze auf Basis radikalisch härtbarer Reaktionskunstharze und ein oder mehrere mindestens eine Si-gebundene hydrolysierbare Gruppe und mindestens einen nicht hydrolysierbaren olefinischen Rest beinhaltende oligomere Siloxane und räumlich getrennt einen Härter.

Die der vorliegenden Erfindung zugrunde liegende Aufgabe besteht in der Bereitstellung eines neuen Befestigungssystems, das zum Einbringen von Verankerungsmitteln, wie beispielsweise Schrauben in Löcher oder Spalten, geeignet ist.

Die Aufgabe wird gelöst durch ein Befestigungssystem gemäß Anspruch 1.

Das erfindungsgemäße Befestigungssystem zeichnet sich unter anderem dadurch aus, dass auf die Verwendung von kennzeichnungspflichtigen und/oder gesundheitsschädlichen Phthalaten als Phlegmatisierungsmittel für die in der Härterkomponente als Initiator enthaltenen Peroxide, d.h. Dibenzolyperoxid, verzichtet werden kann. Die erfindungsgemäß als Phlegmatisierungsmittel verwendeten Benzoate, d.h. Ethylenglykoldibenzoat und Diethylenglykoldibenzoat, sind weder gesundheitsgefährdend noch ist in den entsprechenden Sicherheitsdatenblättern eine spezielle Kennzeichnungspflicht hinsichtlich der Symbole "GHS08", dem Signalwort "Gefahr" und dem Hazard-Satz "H360D" (kann das Kind im Mutterleib schädigen) erforderlich. Beispielsweise ist Ethylenglykoldibenzoat gänzlich kennzeichnungsfrei. Ebenso wenig sind für die erfindungsgemäßen Befestigungssysteme bzw. die zugrunde liegenden konkreten Produkte Handelsbeschränkungen aufgrund der Chemikalienverbotsverordnung zu berücksichtigen. Eine spezielle Schulung von Verkäufern und/oder Kunden ist für solche Produkte nicht erforderlich. Darüber hinaus ist ein Verkauf an Privatleute über das Internet möglich.

Ein weiterer Vorteil der erfindungsgemäßen Befestigungssysteme ist dahingehend zu sehen, dass diese problemlos mit den entsprechenden Peroxiden, d.h. Dibenzoylperoxid, verarbeitbar sind, beispielsweise lassen sie sich auf sehr einfache Weise in Patronen, insbesondere in Glaspatronen, abfüllen. Die Peroxide und/oder die Benzoate bzw. das dabei gebildete Gemisch sind fest und/oder körnig, was eine Abfüllung in die entsprechenden Vorrichtungen und Behältnisse, insbesondere in Patronen, erleichtert.

Die erfindungsgemäßen Befestigungssysteme sind somit insbesondere dann besonders vorteilhaft, sofern sie im Rahmen von Patronen, insbesondere Glaspatronen (Glasampullen) eingesetzt werden. Im Gegensatz zu Kartuschensystemen werden Patronensysteme, insbesondere Glaspatronen, vollständig während der konkreten Anwendung in beispielsweise ein Bohrloch eingeführt, ohne dass dabei, wie bei Kartuschensystemen, Abfall in nennenswerter Form von beispielweise leeren Kartuschen entsteht. Bei einem Patronensystem reagieren die einzelnen Komponenten (Inhaltsstoffe) des erfindungsgemäßen Befestigungssystems durch Aushärtung in der Regel erst dann ab, wenn ein geeignetes Befestigungselement (Verankerungsmittel) in das entsprechende Loch oder die Spalte eingebracht wird, wobei das entsprechende Verankerungsmittel die entsprechende Patrone zerstört, wodurch die chemische Reaktion in Form eines Aushärtungsvorganges in Gang gesetzt wird.

In einer vorteilhaften Ausführungsform der vorliegenden Erfindung wird somit ein Befestigungssystem verwendet, das in Form einer Patrone vorliegt, die für eine einfache Anwendung mengenmäßig auf die gewünschte Größe eines Loches und/oder Spaltes und/oder die Größe eines geeigneten Verankerungsmittels vorportioniert ist. Bei dieser Ausführungsform fällt in der Praxis gar kein Abfall an, weil das vorhandene Material der Patrone als solches, insbesondere einer Glaspatrone, den Aushärtungsvorgang im entsprechenden Bohrloch nicht stört.

Der Vorteil zeigt sich insbesondere gegenüber Kartuschensystemen, bei denen in der Praxis eine deutliche Menge an Abfall anfällt, da Kartuschensysteme in der Regel für eine größere Menge von Anwendungen (beispielsweise in Form vom Einbringen in unterschiedliche Bohrlöcher) vorportioniert sind. In der Praxis werden meistens Kartuschensysteme hergestellt, die zur Anwendung für 10 bis 15 Bohrlöcher geeignet sind. Bei jeder einzelnen Anwendung müssen die jeweiligen Einzelkomponenten der entsprechenden Kartuschensysteme vorher aus der entsprechenden Kartusche ausgepresst werden, bis sich das richtige Mischungsverhältnis eingestellt hat, und dann kann der Befestigungsmörtel in das gewünschte Bohrloch eingebracht werden, bevor ein geeignetes Verankerungsmittel hinzugefügt wird. Der so erhaltene "Vorlauf" wird weggeworfen ebenso wie die leere Kartusche.

Ein weiterer Vorteil des erfindungsgemäßen Befestigungssystems ist dahingehend zu sehen, dass in einer bevorzugter Ausführungsform auf die Verwendung von Wasser als Lösungsmittel und/oder Phlegmatisierungsmittel verzichtet werden kann. Wie vorstehend im Zusammenhang mit den in DE-A 10 2014 103 920 beschriebenen mehrkomponentigen Befestigungssystemen auf Kartuschenbasis, ist die Verwendung von Wasser oft problematisch, weil Wasser das Mischen der Harzkomponente und der Härtekomponente bei der konkreten Anwendung erschwert und/oder weil sich Wasser abtrennt, was den molekularen Verbund stört, was sich wiederum negativ auf die Festigkeit des einzubringenden Verankerungsmittels auswirken kann.

Sofern Patronensysteme verwendet werden sollen, werden in der Praxis häufig feste Peroxide als Härterkomponente verwendet. Die festen Peroxide können zwar mit Phthalaten als Phlegmatisierungsmittel gut rieselfähig eingestellt werden, die Verwendung von Phthalaten ist jedoch, wie vorstehend bereits erwähnt, aufgrund der gesundheitsgefährdenden Eigenschaft nicht erwünscht. Die erfindungsgemäß eingesetzten Benzoate, d.h. Ethylenglykoldibenzoat und Diethylenglykoldibenzoat, können in vorteilhafter Weise Phthalate als Phlegmatisierungsmittel, insbesondere bei festen und/oder körnigen Härtersystemen ersetzen, da sich eine gute Rieselfähigkeit der Härterkomponente und somit des Gesamtsystems einstellen lässt.

Die Verwendung von Benzoaten, d.h. Ethylenglykoldibenzoat und Diethylenglykoldibenzoat, als Phlegmatisierungsmittel, insbesondere im Zusammenhang mit der Verwendung von festen Peroxiden, d.h. Dibenzoylperoxid, in Patronensystemen, ist gegenüber der Verwendung von alternativen Phlegmatisierungsmitteln wie Zement oder Kieselsäure, ebenfalls vorteilhaft. Dies ist insbesondere darin begründet, weil Zement oder Kieselsäure in Verbindung mit Peroxiden zur Klumpenbildung neigen und sich somit nur schwer in die entsprechenden, dünnen Glasröhrchen, die wiederum das Getrennthalten von Harz und Härter in dem Patronensystem ermöglichen, einfüllen lassen.

Ein weiterer Vorteil der erfindungsgemäßen Befestigungssysteme ist dahingehend zu sehen, dass sie über eine hohe Temperaturstabilität verfügen, insbesondere hinsichtlich der Härterkomponente. Dies ist von großem Vorteil, wenn beispielsweise im Sommer bei relativ hohen Temperaturen eine entsprechende Anwendung im Baugewerbe erfolgen soll oder wenn die entsprechenden Befestigungssysteme in generell sehr warme/heiße Länder exportiert werden sollen, wo bereits die Lagerung der Befestigungssysteme als solche problematisch sein kann. Die erfindungsgemäßen Befestigungssysteme sind somit auch für einen langen Zeitraum und/oder bei ganzjährig kritischen Temperaturbedingungen problemlos und gut lagerfähig.

Nachfolgend werden das erfindungsgemäße Befestigungssystem sowie die weiteren Gegenstände der Erfindung näher definiert.

Der erste Gegenstand der vorliegenden Erfindung ist das Befestigungssystem umfassend die Komponenten (A) und (B) mit
(A) einer mindestens ein Harz enthaltenden Komponente (A),
(B) einer als Härter fungierenden Komponente (B) enthaltend mindestens ein Peroxid, welches Dibenzoylperoxid ist, und mindestens ein Benzoat ausgewählt aus Ethylenglykoldibenzoat und Diethylenglykoldibenzoat, und
(F) gegebenenfalls eine als Füllstoff fungierende Komponente (F), welche mit dem mindestens einen Benzoat vermischt ist;
wobei die Komponenten (A) und (B) getrennt voneinander vorliegen,
wobei das Gewichtsverhältnis von dem mindestens einen Peroxid gemäß Komponente (B) zu der Summe des Gewichts von dem mindestens einen Benzoat gemäß Komponente (B) und gegebenenfalls dem mit dem mindestens einen Benzoat vermischten mindestens einen Füllstoff gemäß Komponente (F) im Bereich von 2:1 bis 1:2 liegt, und
wobei die Komponente (B) und gegebenenfalls mit der Komponente (B) vermischte weitere Komponenten fest und/oder körnig sind.

Die einzelnen Komponenten (A) und (B) als solche und/oder gegebenenfalls darin enthaltene weitere Komponenten, Verbindungen oder Beimischungen als solche sind dem Fachmann bekannt. Dies gilt sinngemäß auch für die nachfolgend näher definierten optionalen Komponenten (C) bis (I), die gegebenenfalls im erfindungsgemäßen Befestigungssystem enthalten sein können bzw. den Komponenten (A) und (B) beigemischt werden. Demzufolge lassen sich beispielsweise konkrete Ausführungsformen für ein Harz, ein Peroxid, ein Lösungsmittel, einen Reaktivverdünner, einen Füllstoff und dergleichen unter anderen Dokumenten des Standes der Technik wir DE-A 10 2014 103 920, EP-B 2 640 675, WO 2016/000807 oder WO 2011/072789 beispielhaft entnehmen.

Das erfindungsgemäße Befestigungssystem enthält als Komponente (A) mindestens ein Harz. Diese Komponente (A) wird auch als "Harzkomponente" bezeichnet. Außer mindestens einem Harz können in der Komponente (A) auch noch weitere Verbindungen enthalten sein, die kein Harz als solches darstellen bzw. diesem beigemischt werden. Beispielsweise ist es möglich, dass das Harz mit Zusatz- oder Füllstoffen vermischt ist, wie sie beispielsweise nachfolgend für die Komponente (F) definiert sind. Sinngemäßes gilt auch für Reaktivverdünner, Lösungsmittel oder copolymerisierbare Silane.

Das Harz als solches ist dem Fachmann bekannt. Erfindungsgemäß ist es bevorzugt, dass das in der Komponente (A) enthaltene mindestens eine Harz ein radikalisch polymerisierbares Harz ist, vorzugsweise ausgewählt aus einem ungesättigten Polyester, einem Vinylester, einem Urethan(meth)acrylat und/oder einem Epoxy(meth)acrylat, mehr bevorzugt mindestens ein Epoxy(meth)acrylat auf Bisphenol-A-Basis.

Unter radikalisch polymerisierbaren Harzen sind beispielsweise radikalisch härtende ungesättigte Reaktivkunstharze zu verstehen, die als radikalisch aushärtende Komponenten (also vor der Härterzugabe) organische Verbindungen mit ungesättigten (zum Beispiel olefinischen) Resten umfassen. Beispielsweise solche, die härtbare Ester mit ungesättigten Carbonsäureresten umfassen, insbesondere (Meth)acrylat- oder (Meth)acrylamid-Monomere, wie Acrylsäure und/oder Methacrylsäure oder vorzugsweise deren Ester (als (Meth)acrylate bezeichnet) oder Amide, insbesondere (Meth)acrylate wie Mono-, Di-, Tri- oder Poly(meth)acrylate (einschließlich Hydroxypropyl(meth)acrylat, Hydroxyethyl(meth)acrylat, Ethylenglykoldi(meth)acrylat, Butandioldi(meth)acrylat, Hexandioldimethacrylat; darüber hinaus auch solche mit (vorzugsweise jeweils propoxylierten oder insbesondere ethoxylierten) aromatischen Diolfragmenten, wie Bisphenol-A-, Bisphenol-F- oder Novolak-(insbesondere di-) (meth)acrylat) oder Epoxy(meth)acrylate (insbesondere in Form von Umsetzungsprodukten von Di- oder Polyepoxiden, mit ungesättigten Carbonsäuren, zum Beispiel C₂-C₇-Alkencarbonsäuren, wie insbesondere (Meth)acrylsäure).

Im Rahmen der vorliegenden Erfindung steht der Begriff "(Meth)acryl" für i) Acryl und Methacryl (jeweils einzeln) oder ii) Acryl und Methacryl (als Gemisch). Dies gilt sowohl für die freie Säure ((Meth)acrylsäure) oder die entsprechenden Ester ((Meth)acrylate) oder sonstige auf der Säure basierende Bausteine.

Beispiele für in besonderen Ausführungsformen der Erfindung vorhandene bzw. verwendete Epoxy(meth)acrylate sind solche der Formel (I): 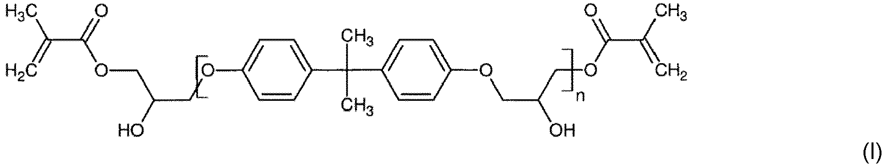 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak(insbesondere di-)(meth)acrylate sind solche der Formel (II): 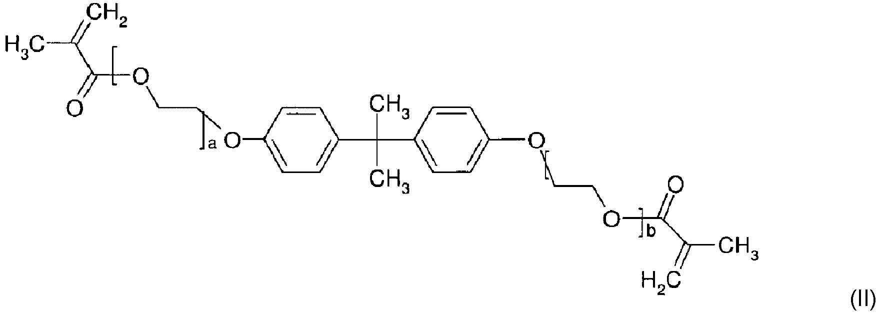 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a-und b-)Werten vorliegen und durch die Formel repräsentiert werden, sind auch nicht-ganzzahlige Zahlen als Mittelwert möglich).

In einer bevorzugten Ausführungsform der vorliegenden Erfindung enthält die Komponente (A) mindestens ein auf Bisphenol-A basierendes Harz. Vorzugsweise enthält das auf Bisphenol-A basierte Harz Bisphenol-A-Diglyzidyldi(meth)acrylat, insbesondere Diglyzidyldimethacrylat. Weiterhin ist es bevorzugt, dass das Harz mindestens ein ethoxyliertes Bisphenol-A-Dimethacrylat ist. Solche Verbindungen sind kommerziell erhältlich, beispielsweise unter der Handelsbezeichnung "Palatal K790" (Hersteller: Royal DSM-Gruppe).

Das erfindungsgemäße Befestigungssystem enthält als Komponente (B) mindestens ein Peroxid, welches Dibenzoylperoxide ist, und mindestens ein Benzoat ausgewählt aus Ethylenglykoldibenzoat und Diethylenglykoldibenzoat. Diese Komponente (B) wird auch als "Härterkomponente" bezeichnet. Außer mindestens einem Peroxid und mindestens einem Benzoat können in der Komponente (B) noch weitere Verbindungen enthalten und/oder beigemischt sein, die nicht in die Definition eines Peroxids oder eines Benzoats fallen. Beispielsweise kann es sich dabei um Zusatz- oder Füllstoffe handeln, wie sie nachfolgend für die Komponente (F) definiert sind.

Sowohl Peroxide als auch Benzoate als solche sind dem Fachmann bekannt. Die jeweiligen Verbindungen können als Gemische oder als Einzelverbindungen in den dem Fachmann bekannten Konzentrationen und/oder Mischungsverhältnissen eingesetzt werden.

Das in der Komponente (B) enthaltene mindestens eine Peroxid ist Dibenzoylperoxid. Weitere mögliche Peroxide sind Methylethylketonperoxid, tert.-Butylperbenzoat, Cyclohexanonperoxid, Laurylperoxid, Cumolhydroperoxid und/oder tert.-Butylperoxy-2-ethylhexanoat.

Im Rahmen der vorliegenden Erfindung handelt es sich bei dem oben genannten tert.-Butylperbenzoat ausschließlich um ein in der Komponente (B) enthaltenes Peroxid; das heißt, dass das tert.-Butylperbenzoat im Rahmen der vorliegenden Erfindung kein Benzoat darstellt.

Erfindungsgemäß ist das in der Komponente (B) enthaltene mindestens eine Benzoat ausgewählt ist aus Ethylenglykoldibenzoat und Diethylenglykoldibenzoat. Weitere mögliche Benzoate sind Triethylenglykoldibenzoat, 1,2-Propandioldibenzoat, 1,3-Propandioldibenzoat, 1,4-Butandioldibenzoat, 1,6-Hexandioldibenzoat, Propylenglykoldibenzoat, Dipropylenglykoldibenzoat, 1,4-Cyclohexandioldibenzoat und Neopentylglycoldibenzoat.

Das erfindungsgemäße Befestigungssystem kann neben der Harzkomponente (A) und der Härterkomponente (B) noch mindestens eine weitere, dem Fachmann bekannte Komponente enthalten. Sofern mindestens eine weitere Komponente enthalten ist, ist es erfindungsgemäß bevorzugt, dass das Befestigungssystem mindestens eine weitere Komponente (C) bis (I), umfasst, die ausgewählt ist aus mindestens einem Reaktivverdünner (Komponente C), mindestens einem Lösungsmittel (Komponente D), mindestens einem mit dem Harz copolymerisierbaren Silan (Komponente E), mindestens einem Füllstoff (Komponente F), mindestens einem Beschleuniger (Komponente G), mindestens einem Stabilisator (Komponente H) und/oder einem sonstigen Additiv (Komponente I), wobei
i) die einzelnen Komponenten (C) bis (I) getrennt voneinander vorliegen oder
ii) vollständig oder zumindest teilweise miteinander und/oder mit der Komponente (A) und/oder der Komponente (B) vermischt sind.

Erfindungsgemäß ist es bevorzugt, dass das Befestigungssystem mindestens eine weitere Komponente umfasst, ausgewählt aus mindestens einem Reaktivverdünner (Komponente C), mindestens einem Lösungsmittel (Komponente (D) und/oder mindestens einem Füllstoff (Komponente F), mehr bevorzugt ausgewählt aus mindestens einem Reaktivverdünner (Komponente C) und/oder mindestens einem Füllstoff (Komponente F), wobei vorzugsweise diese zusätzlichen Komponenten vollständig mit der Komponente (A) und/oder der Komponente (B) vermischt sind.

Reaktivverdünner als solche sind dem Fachmann bekannt. Sofern erfindungsgemäß ein Reaktivverdünner gemäß Komponente (C) eingesetzt wird, ist dieser vorzugsweise ausgewählt aus Styrol, alpha-Methylstyrol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Triethylenglykol(meth)acrylat, Propylenglykoldi(meth)acrylat, Butandioldi(meth)acrylat, Glycerin(meth)acrylat, Hydroxyethyl(meth)acrylat, Hydroxypropyl(meth)acrylat, Propylidintrimethyltri(meth)acrylat, und/oder Acetoacetatoethyl(meth)acrylat.

Lösungsmittel als solche (gemäß Komponente (D)) sind dem Fachmann ebenfalls bekannt. Sofern im erfindungsgemäßen Befestigungssystem ein Lösungsmittel vorhanden ist, ist das mindestens eine Lösungsmittel gemäß Komponente (D) aus Ethylenglykol, Glycerin und/oder einem wasserlöslichen, mit dem Harz copolymierisierbaren Polyethlenglykolund/oder Polypropylenglykol-Derivat, vorzugsweise ausgewählt aus Ethylenglykol und das Lösungsmittel ist vollständig mit der Komponente (A) vermischt.

In einer bevorzugten Ausführungsform der vorliegenden Erfindung ist das Befestigungssystem jedoch vollständig frei oder zumindest weitgehend frei von Lösungsmitteln (Komponente (D)). Insbesondere ist es bevorzugt, dass das erfindungsgemäße Befestigungssystem vollständig oder zumindest weitgehend frei von Wasser ist. Der Begriff "zumindest weitgehend frei" bedeutet im Rahmen der vorliegenden Erfindung, soweit nicht anders angegeben, generell, dass zwar noch Spuren oder kleine Mengen der entsprechenden Verbindung vorhanden sein können, diese betragen jedoch nicht mehr als maximal 1 Gew.-%, mehr bevorzugt maximal 0,1 Gew.-%, nochmal bevorzugt maximal 0,01 Gew.-%, insbesondere maximal 100 ppm, jeweils bezogen auf das Gesamtgewicht des Befestigungssystems.

Das erfindungsgemäße Befestigungssystem kann gegebenenfalls mindestens ein mit dem Harz gemäß Komponente (A) copolymerisierbares Silan als Komponente (E) enthalten. Hierfür geeignete Silane sind beispielsweise in WO-2011/072789 offenbart. Vorzugsweise werden solche Silane eingesetzt, die über geeignete funktionale Gruppen verfügen, die mit einem auf Bisphenol-A basierenden Harz polymerisieren können. Weiterhin weisen solche Silane vorzugsweise hydrolysierbare Gruppen auf, vorzugsweise Alkoxygruppen, insbesondere Methoxygruppen.

Als weitere optionale Komponente können die erfindungsgemäßen Befestigungssysteme mindestens einen Füllstoff gemäß Komponente (F) enthalten. Füllstoffe als solche sind dem Fachmann bekannt.

Erfindungsgemäß ist es bevorzugt, dass der mindestens eine Füllstoff gemäß Komponente (F) ausgewählt ist aus Quarz, Sand, Korund, Talkum, Keramik, Tonerde, Glas, Zement, Leichtspat und/oder Schwerspat, vorzugsweise ist der Füllstoff Quarz und/oder die Komponente (F) ist vollständig mit der Komponente (B) vermischt.

Erfindungsgemäß ist es weiterhin bevorzugt, dass als Füllstoff (F) keine Verbindungen eingesetzt werden, die zur Klumpenbildung neigen, sofern sie als Füllstoff oder Phlegmatisierungsmittel im Zusammenhang mit insbesondere festen Peroxiden eingesetzt werden sollen. Zement oder (pyrogene) Kieselsäure sind im Rahmen der vorliegenden Erfindung als Füllstoff gemäß Komponente (F) bzw. als zusätzliches Phlegmatisierungsmittel weniger gut geeignet. Wasser ist im Rahmen der vorliegenden Erfindung kein Füllstoff gemäß Komponente (F) und/oder nicht als Phlegmatisierungsmittel geeignet.

Im erfindungsgemäßen Befestigungssystem können die einzelnen Komponenten (A), (B) sowie die gegebenenfalls vorhandenen optionalen Komponenten (C) bis (I) prinzipiell in beliebigen, dem Fachmann bekannten Verhältnissen, vorhanden sein. Erfindungsgemäß ist es jedoch bevorzugt, dass
i) die Komponente (B) 0,1 bis 10 Gew.-% Peroxid und 0,1 bis 10 Gew.-% Benzoat enthält und gegebenenfalls mit 5 bis 50 Gew.-% Füllstoff gemäß Komponente (F) vermischt ist (jeweils bezogen auf das Gesamtgewicht des Beschichtungssystem, und/oder
ii) die Komponente (B) zur Komponente (A) in einem Verhältnis im Bereich von 0,5 bis 10 % (bezogen auf das Gesamtgewicht des Beschichtungssystems) vorliegt, und/oder
iii) das Gewichtsverhältnis von mindestens einem Peroxid gemäß Komponente (B) zu der Summe des Gewichts von mindestens einem Benzoat gemäß Komponente (B) und gegebenenfalls mit dem mindestens einen Benzoat vermischten mindestens einen Füllstoff gemäß Komponente (F) 1:1 beträgt.

Das erfindungsgemäße Befestigungssystem wird in der Regel als Mehrkomponentensystem, insbesondere als Zweikomponentensystem, verwendet. Allerdings ist es theoretisch auch möglich, das erfindungsgemäße Befestigungssystem als Einkomponentensystem bereitzustellen. Dies wäre beispielsweise dann der Fall, sofern die Komponenten (A) und (B) bei extrem tiefen Temperaturen gelagert werden würden oder mit geeigneten Schutzgruppen versehen werden, die jedoch vor der Anwendung erst entfernt werden müssen. Dies ist in der Praxis jedoch weniger bevorzugt.

Geeignete Vorrichtungen zur sicheren Aufbewahrung/Lagerung des erfindungsgemäßen Befestigungssystems als Mehrkomponentensystem sind dem Fachmann bekannt, Beispiele hierfür sind Kartuschen oder Patronen.

Erfindungsgemäß ist es bevorzugt, dass
i) das Befestigungssystem ein Mehrkomponentensystem, insbesondere ein Zweikomponentensystem, ist, und/oder,
ii) die Komponenten (A) und (B) reaktionsinhibierend getrennt voneinander in unterschiedlichen Behältern vorliegen, vorzugsweise in Mehrkammervorrichtungen, mehr bevorzugt in Mehrkammerpatronen, Mehrkammerkapseln oder Mehrkammerkartuschen, noch mehr bevorzugt in Zweikammerpatronen, und/oder,
iii) das Befestigungssystem in Form einer Kartusche, Patrone und/oder Kapsel, vorzugsweise in Form einer Patrone, insbesondere in Form einer Glaspatrone, vorliegt.

Erfindungsgemäß sind die Komponente (B), enthaltend mindestens ein Peroxid, d.h. Dibenzoylperoxid, und mindestens ein Benzoat ausgewählt aus Ethylenglykoldibenzoat und Diethylenglykoldibenzoat, und die gegebenenfalls mit der Komponente (B) vermischten weiteren Komponenten fest und/oder körnig.

Solche Befestigungssysteme werden vorzugsweise in Form von Patronen, insbesondere in Form von Glaspatronen (Glasampullen) bereitgestellt. Vorzugsweise sind die Patronensystem so portioniert, dass sie für eine einfache Anwendung auf die Größe des zu befüllenden Loches oder Spaltes mengenmäßig abgestimmt sind.

Ein weiterer Gegenstand der vorliegenden Erfindung ist die Verwendung des vorstehend beschriebenen erfindungsgemäßen Befestigungssystems zum Einbringen von Verankerungsmittel insbesondere in Bohrlöcher und/oder Betonlöcher, als chemischer Dübel, als chemische Befestigung von Verankerungsmitteln, als Klebmittel in der Befestigungstechnik und/oder als Mörtelmasse zum Befestigen von Verankerungsmitteln.

Verankerungsmittel als solche sind dem Fachmann bekannt, beispielsweise kann es sich hierbei um Schrauben, Ankerstangen mit Gewinde oder Konen oder sonstige Befestigungsmittel handeln.

Ein weiterer Gegenstand der vorliegenden Erfindung ist ein Verfahren zur Befestigung von Verankerungsmitteln in Löchern oder Spalten, insbesondere in Bohrlöchern und/oder Betonlöchern, dadurch gekennzeichnet, dass mindestens ein vorstehend beschriebenes erfindungsgemäßes Befestigungssystem und mindestens ein Verankerungsmittel in ein Loch oder einen Spalt eingebracht werden, wobei die Komponenten (A) und (B) sowie etwaige zusätzliche Komponenten miteinander vermischt und/oder in Kontakt gebracht werden und anschließend ein Aushärten des Befestigungssystems erfolgt.

Ein weiterer Gegenstand der vorliegenden Erfindung ist die Verwendung von mindestens einem Benzoat ausgewählt aus Ethylenglykoldibenzoat und Diethylenglykoldibenzoat zur Herstellung eines erfindungsgemäßen Befestigungssystems gemäß den vorstehenden Definitionen.

Erfindungsgemäß wird ein Benzoat verwendet ausgewählt aus Ethylenglykoldibenzoat und Diethylenglykoldibenzoat. Weitere mögliche Benzoate sind Triethylenglykoldibenzoat, 1,2-Propandioldibenzoat, 1,3-Propandioldibenzoat, 1,4-Butandioldibenzoat, 1,6-Hexandioldibenzoat, Propylenglykoldibenzoat, Dipropylenglykoldibenzoat, 1,4-Cyclohexandioldibenzoat und Neopentylglycoldibenzoat.

## Patentansprüche

1. Befestigungssystem umfassend die Komponenten (A) und (B) mit
(A) einer mindestens ein Harz enthaltenden Komponente (A)
(B) einer als Härter fungierenden Komponente (B) enthaltend
- mindestens ein Peroxid, welches Dibenzoylperoxid ist, und
- mindestens ein Benzoat ausgewählt aus Ethylenglykoldibenzoat und Diethylenglykoldibenzoat; und
(F) gegebenenfalls eine als Füllstoff fungierende Komponente (F), welche mit dem mindestens einen Benzoat vermischt ist,
wobei die Komponenten (A) und (B) getrennt voneinander vorliegen,
wobei das Gewichtsverhältnis von dem mindestens einen Peroxid gemäß Komponente (B) zu der Summe des Gewichts von dem mindestens einen Benzoat gemäß Komponente (B) und gegebenenfalls dem mit dem mindestens einen Benzoat vermischten mindestens einen Füllstoff gemäß Komponente (F) im Bereich von 2:1 bis 1:2 liegt, und
wobei die Komponente (B) und gegebenenfalls mit der Komponente (B) vermischte weitere Komponenten fest und/oder körnig sind.

2. Befestigungssystem gemäß Anspruch 1, **dadurch gekennzeichnet, dass** das in der Komponente (A) enthaltene mindestens eine Harz ein radikalisch polymerisierbares Harz ist, vorzugsweise ausgewählt aus einem ungesättigten Polyester, einem Vinylester, einem Urethan(meth)acrylat und/oder einem Epoxy(meth)acrylat, mehr bevorzugt mindestens ein Epoxy(meth)acrylat auf Bisphenol-A-Basis.

3. Befestigungssystem gemäß Anspruch 1 oder 2, **dadurch gekennzeichnet, dass**
i) das Befestigungssystem ein Mehrkomponentensystem, insbesondere ein Zweikomponentensystem, ist, und/oder,
ii) die Komponenten (A) und (B) reaktionsinhibierend getrennt voneinander in unterschiedlichen Behältern vorliegen, vorzugsweise in Mehrkammervorrichtungen, mehr bevorzugt in Mehrkammerpatronen, Mehrkammerkapseln oder Mehrkammerkartuschen, noch mehr bevorzugt in Zweikammerpatronen, und/oder,
iii) das Befestigungssystem in Form einer Kartusche, Patrone und/oder Kapsel, vorzugsweise in Form einer Patrone, insbesondere in Form einer Glaspatrone, vorliegt.

4. Befestigungssystem gemäß einem der Ansprüche 1 bis 3, **dadurch gekennzeichnet, dass** das Befestigungssystem mindestens eine weitere Komponente, (C) bis (I), umfasst, die ausgewählt ist aus mindestens einem Reaktivverdünner (Komponente C), mindestens einem Lösungsmittel (Komponente D), mindestens einem mit dem Harz copolymerisierbaren Silan (Komponente E), mindestens einem Füllstoff (Komponente F), mindestens einem Beschleuniger (Komponente G), mindestens einem Stabilisator (Komponente H) und/oder einem sonstigen Additiv (Komponente I), wobei
i) die einzelnen Komponenten (C) bis (I) getrennt voneinander vorliegen oder
ii) vollständig oder zumindest teilweise miteinander und/oder mit der Komponente (A) und/oder der Komponente (B) vermischt sind,
vorzugsweise umfasst das Befestigungssystem mindestens eine weitere Komponente, ausgewählt aus mindestens einem Reaktivverdünner (Komponente C), mindestens einem Lösungsmittel (Komponente (D) und/oder mindestens einem Füllstoff (Komponente F), mehr bevorzugt ausgewählt aus mindestens einem Reaktivverdünner (Komponente C) und/oder mindestens einem Füllstoff (Komponente F), wobei vorzugsweise diese zusätzlichen Komponenten vollständig mit der Komponente (A) und/oder der Komponente (B) vermischt sind.

5. Befestigungssystem gemäß Anspruch 4, **dadurch gekennzeichnet, dass** der mindestens eine Reaktivverdünner gemäß Komponente (C) ausgewählt ist aus Styrol, alpha-Methylstyrol, Divinylbenzol, (Meth)acrylamid, Methyl(meth)acrylat, Ethyl(meth)acrylat, Propyl(meth)acrylat, Butyl(meth)acrylat, Ethylhexyl(meth)acrylat, Neopentylglykol(meth)acrylat, Ethylenglykoldi(meth)acrylat, Diethylenglykoldi(meth)acrylat, Triethylenglykol(meth)acrylat, Propylenglykoldi(meth)acrylat, Butandioldi(meth)acrylat, Glycerin(meth)acrylat, Hydroxyethyl(meth)acrylat, Hydroxypropyl(meth)acrylat, Propylidintrimethyltri(meth)acrylat, und/oder Acetoacetatoethyl(meth)acrylat.

6. Befestigungssystem gemäß Anspruch 4 oder 5, **dadurch gekennzeichnet, dass** die Komponente (C) zumindest teilweise, vorzugsweise vollständig mit der Komponente (A) vermischt ist.

7. Befestigungssystem gemäß einem der Ansprüche 4 bis 6, **dadurch gekennzeichnet, dass** der mindestens eine Füllstoff gemäß Komponente (F) ausgewählt ist aus Quarz, Sand, Korund, Talkum, Keramik, Tonerde, Glas, Zement, Leichtspat und/oder Schwerspat, vorzugsweise ist der Füllstoff Quarz und/oder die Komponente (F) ist vollständig mit der Komponente (B) vermischt.

8. Befestigungssystem gemäß einem der Ansprüche 4 bis 7, **dadurch gekennzeichnet, dass**
i) das mindestens eine Lösungsmittel gemäß Komponente (D) ausgewählt ist aus Ethylenglykol, Glycerin und/oder einem wasserlöslichen, mit dem Harz copolymierisierbaren Polyethlenglykol- und/oder Polypropylenglykol-Derivat, vorzugsweise ausgewählt aus Ethylenglykol und/oder das Lösungsmittel ist vollständig mit der Komponente (A) vermischt, oder
ii) das Befestigungssystem vollständig frei oder zumindest weitgehend frei von Lösungsmitteln (Komponente D) ist.

9. Befestigungssystem gemäß einem der Ansprüche 1 bis 8, **dadurch gekennzeichnet, dass** die Komponente (B) 0,1 bis 10 Gew.-% Peroxid und 0,1 bis 10 Gew.-% Benzoat enthält und gegebenenfalls mit 5 bis 50 Gew.-% Füllstoff gemäß Komponente (F) vermischt ist (jeweils bezogen auf das Gesamtgewicht des Befestigungssystems.

10. Befestigungssystem gemäß einem der Ansprüche 1 bis 9, **dadurch gekennzeichnet, dass** die Komponente (B) zur Komponente (A) in einem Verhältnis im Bereich von 0,5 bis 10 % (bezogen auf das Gesamtgewicht des Befestigungssystems) vorliegt.

11. Befestigungssystem gemäß einem der Ansprüche 1 bis 10, **dadurch gekennzeichnet, dass** das Gewichtsverhältnis von dem mindestens einen Peroxid gemäß Komponente (B) zu der Summe des Gewichts von dem mindestens einen Benzoat gemäß Komponente (B) und gegebenenfalls dem mit dem mindestens einen Benzoat vermischten mindestens einen Füllstoff gemäß Komponente (F) im Bereich von 1:1 liegt.

12. Verwendung eines Befestigungssystems gemäß einem der Ansprüche 1 bis 11 zum Einbringen von Verankerungsmitteln in Löcher oder Spalten, insbesondere in Bohrlöcher und/oder Betonlöcher, als chemischer Dübel, als chemische Befestigung von Verankerungsmittel als Klebmittel in der Befestigungstechnik und/oder als Mörtelmasse zum Befestigen von Verankerungsmittel.

13. Verfahren zur Befestigung von Verankerungsmittel in Löchern oder Spalten, insbesondere in Bohrlöchern und/oder Betonlöchern, **dadurch gekennzeichnet, dass** mindestens ein Befestigungssystem gemäß einem der Ansprüche 1 bis 11 und mindestens ein Verankerungsmittel in ein Loch oder einen Spalt eingebracht werden, wobei die Komponenten (A) und (B) sowie etwaige zusätzliche Komponenten miteinander vermischt und/oder in Kontakt gebracht werden und anschließend ein Aushärten des Befestigungssystems erfolgt.

14. Verwendung von mindestens einem Benzoat ausgewählt aus Ethylenglykoldibenzoat und Diethylenglykoldibenzoat zur Herstellung eines Befestigungssystems gemäß einem der Ansprüche 1 bis 11.

## Claims

1. A fastening system comprising the components (A) and (B) with
(A) a component (A) containing at least one resin
(B) a component (B) acting as a curing agent, containing
- at least one peroxide which is dibenzoyl peroxide, and
- at least one benzoate selected from ethylene glycol dibenzoate and diethylene glycol dibenzoate; and
(F) optionally, a filler component (F) mixed with the at least one benzoate;
wherein the components (A) and (B) are present separately from one another,
wherein the weight ratio of the at least one peroxide according to component (B) to the sum of the weight of the at least one benzoate according to component (B) and optionally the at least one filler according to component (F) mixed with the at least one benzoate is in the range from 2:1 to 1:2, and
wherein the component (B) and, optionally, other components mixed with component (B) are solid and/or granular.

2. The fastening system according to claim 1, **characterized in that** the at least one resin contained in component (A) is a radically polymerizable resin, preferably selected from an unsaturated polyester, a vinyl ester, a urethane (meth)acrylate, and/or an epoxy (meth)acrylate, more preferably at least one bisphenol A-based epoxy (meth)acrylate.

3. The fastening system according to claim 1 or 2, **characterized in that**
i) the fastening system is a multi-component system, in particular a two-component system, and/or
ii) the components (A) and (B) are present separately from one another in different containers in a reaction-inhibiting manner, preferably in multi-chamber devices, more preferably in multi-chamber cartridges, multi-chamber capsules, or multi-chamber canisters, even more preferably in two-chamber cartridges, and/or
iii) the fastening system is present in the form of a canister, cartridge, and/or capsule, preferably in the form of a cartridge, in particular in the form of a glass cartridge.

4. The fastening system according to any one of claims 1 to 3, **characterized in that** the fastening system comprises at least one further component (C) to (I), which is selected from at least one reactive diluent (component C), at least one solvent (component D), at least one silane that can be copolymerized with the resin (component E), at least one filler (component F), at least one accelerator (component G), at least one stabilizer (component H), and/or another additive (component I), wherein
i) the individual components (C) to (I) are present separately from one another or
ii) are fully or at least partially mixed with each other and/or with component (A) and/or component (B),
the fastening system preferably comprises at least one further component selected from at least one reactive diluent (component C), at least one solvent (component (D), and/or at least one filler (component F), more preferably selected from at least one reactive diluent (component C) and/or at least one filler (component F), wherein these additional components preferably are completely mixed with component (A) and/or component (B).

5. The fastening system according to Claim 4, **characterized in that** the at least one reactive diluent according to component (C) is selected from styrene, alpha-methylstyrene, divinylbenzene, (meth)acrylamide, methyl (meth)acrylate, ethyl (meth)acrylate, propyl (meth)acrylate, butyl (meth)acrylate, ethylhexyl (meth)acrylate, neopentyl glycol (meth)acrylate, ethylene glycol di(meth)acrylate, diethylene glycol di(meth)acrylate, triethylene glycol (meth)acrylate, propylene glycol di(meth)acrylate, butanediol di(meth)acrylate, glycerol (meth)acrylate, hydroxyethyl (meth)acrylate, hydroxypropyl (meth)acrylate, propylidine trimethyltri(meth)acrylate, and/or acetoacetatoethyl (meth)acrylate.

6. The fastening system according to claim 4 or 5, **characterized in that** component (C) is at least partially, preferably completely, mixed with component (A).

7. The fastening system according to any one of claims 4 to 6, **characterized in that** the at least one filler according to component (F) is selected from quartz, sand, corundum, talcum, ceramic, clay, glass, cement, light spar, and/or barite, preferably the filler is quartz and/or the component (F) is fully mixed with component (B).

8. The fastening system according to any one of claims 4 to 7, **characterized in that**
i) the at least one solvent according to component (D) is selected from ethylene glycol, glycerol and/or a water-soluble polyethylene glycol copolymerizable with the resin and/or polypropylene glycol derivative, preferably selected from ethylene glycol, and/or the solvent is fully mixed with component (A), or
ii) the fastening system is completely free or at least largely free of solvents (component D).

9. The fastening system according to any one of claims 1 to 8, **characterized in that** component (B) contains 0.1 to 10% by weight of peroxide and 0.1 to 10% by weight of benzoate and is optionally mixed with 5 to 50% by weight of filler according to component (F) (in each case based on the total weight of the fastening system).

10. The fastening system according to any one of claims 1 to 9, **characterized in that** component (B) to component (A) is present in a ratio in the range from 0.5 to 10% (based on the total weight of the fastening system).

11. The fastening system according to any one of claims 1 to 10, **characterized in that** the weight ratio of the at least one peroxide according to component (B) to the sum of the weight of the at least one benzoate according to component (B) and optionally the at least one filler according to component (F) mixed with the at least one benzoate is in the range of 1:1.

12. Use of a fastening system according to any one of claims 1 to 11 for introducing anchoring means into holes or gaps, in particular into boreholes and/or concrete holes, as a chemical dowel, as a chemical fastening of anchoring agents, as an adhesive in fastening technology, and/or as a mortar mass for attaching anchoring devices.

13. A method of fixing anchoring means in holes or gaps, especially in boreholes and/or concrete holes, **characterized in that** at least one fastening system according to any one of claims 1 to 11 and at least one anchoring means are introduced into a hole or gap, wherein the components (A) and (B) and any additional components are mixed together and/or are brought into contact, followed by curing of the fastening system.

14. Use of at least one benzoate selected from ethylene glycol dibenzoate and diethylene glycol dibenzoate for the production of a fastening system according to any one of claims 1 to 11.

## Revendications

1. Système de fixation comprenant les composants (A) et (B), comportant
(A) un composant (A) contenant au moins une résine
(B) un composant (B) agissant comme un durcisseur et contenant
- au moins un peroxyde qui est le peroxyde de dibenzoyle, et
- au moins un benzoate choisi parmi le dibenzoate d'éthylène glycol et le dibenzoate de diéthylène glycol ; et
(F) éventuellement un composant agissant comme une charge (F) et mélangé avec l'au moins un benzoate ;
dans lequel les composants (A) et (B) se présentent séparément l'un de l'autre,
dans lequel le rapport pondéral entre l'au moins un peroxyde selon le composant (B) et la somme du poids de l'au moins un benzoate selon le composant (B) et éventuellement de l'au moins une charge selon le composant (F) mélangée avec l'au moins un benzoate se trouve dans la plage allant de 2:1 à 1:2, et
dans lequel le composant (B) et, le cas échéant, les autres composants mélangés avec le composant (B) sont solides et/ou sont granuleux.

2. Système de fixation selon la revendication 1, **caractérisé en ce que** l'au moins une résine contenue dans le composant (A) est une résine polymérisable par voie radicalaire, de préférence choisie parmi un polyester insaturé, un ester vinylique, un (méth)acrylate d'uréthane et/ou un (méth)acrylate d'époxy, de manière davantage préférée au moins un (méth)acrylate d'époxy à base de bisphénol A.

3. Système de fixation selon la revendication 1 ou 2, **caractérisé en ce que**
i) le système de fixation est un système à plusieurs composants, en particulier un système à deux composants, et/ou,
ii) les composants (A) et (B) se présentent séparément l'un de l'autre dans des récipients différents d'une manière inhibant la réaction, de préférence dans des dispositifs à plusieurs chambres, de manière davantage préférée dans des cassettes à plusieurs chambres, des capsules à plusieurs chambres ou des cartouches à plusieurs chambres, de manière encore davantage préférée dans des cassettes à deux chambres, et/ou,
iii) le système de fixation sous forme de cartouche, de cassette et/ou de capsule, de préférence sous forme de cassette, en particulier sous forme de cassette en verre.

4. Système de fixation selon l'une des revendications 1 à 3, **caractérisé en ce que** le système de fixation comprend au moins un autre composant (C) à (I), qui est choisi parmi au moins un diluant réactif (composant C), au moins un solvant (composant D), au moins un silane copolymérisable avec la résine (composant E), au moins une charge (composant F), au moins un accélérateur (composant G), au moins un stabilisant (composant H) et/ou un autre additif (composant I), dans lequel
i) les composants individuels (C) à (I) se présentent séparément les uns des autres ou
ii) sont mélangés entièrement ou au moins partiellement les uns avec les autres et/ou avec le composant (A) et/ou le composant (B),
le système de fixation comprend de préférence au moins un autre composant choisi parmi au moins un diluant réactif (composant C), au moins un solvant (composant (D) et/ou au moins une charge (composant F), de manière davantage préférée choisie parmi au moins un diluant réactif (composant C) et/ou au moins une charge (composant F), dans lequel ces composants supplémentaires sont de préférence complètement mélangés avec le composant (A) et/ou le composant (B).

5. Système de fixation selon la revendication 4, **caractérisé en ce que** l'au moins un diluant réactif selon le composant (C) est choisi parmi le styrène, l'alpha-méthylstyrène, le divinylbenzène, le (méth)acrylamide, le (méth)acrylate de méthyle, le (méth)acrylate d'éthyle, le (méth)acrylate de propyle, le (méth)acrylate de butyle, le (méth)acrylate d'éthylhexyle, le (méth)acrylate de néopentylglycol, le di(méth)acrylate d'éthylène glycol, le di(méth)acrylate de diéthylène glycol, le (méth)acrylate de triéthylène glycol, le di(méth)acrylate de propylène glycol, le di(méth)acrylate de butanediol, le (méth)acrylate de glycérol, le (méth)acrylate d'hydroxyéthyle, le (méth)acrylate d'hydroxypropyle, le triméthyltri(méth)acrylate de propylidine, et/ou le (méth)acrylate d'acétoacétatoéthyle.

6. Système de fixation selon la revendication 4 ou 5, **caractérisé en ce que** le composant (C) est mélangé au moins partiellement, de préférence complètement, avec le composant (A).

7. Système de fixation selon l'une des revendications 4 à 6, **caractérisé en ce que** l'au moins une charge selon le composant (F) est choisie parmi le quartz, le sable, le corindon, le talc, la céramique, l'alumine, le verre, le ciment, le spath léger et/ou la barytine, de préférence la charge est du quartz et/ou le composant (F) est entièrement mélangé avec le composant (B).

8. Système de fixation selon l'une des revendications 4 à 7, **caractérisé en ce que**
i) l'au moins un solvant selon le composant (D) est choisi parmi l'éthylène glycol, le glycérol et/ou un dérivé de polyéthylène glycol et/ou dérivé de polypropylène glycol soluble dans l'eau copolymérisable avec la résine, de préférence choisi parmi l'éthylène glycol, et/ou le solvant est entièrement mélangé avec le composant (A), ou
ii) le système de fixation est totalement exempt ou au moins en grande partie exempt de solvants (composant D).

9. Système de fixation selon l'une des revendications 1 à 8, **caractérisé en ce que** le composant (B) contient 0,1 à 10 % en poids de peroxyde et 0,1 à 10 % en poids de benzoate et est éventuellement mélangé avec 5 à 50 % en poids de charge selon le composant (F) (dans chaque cas par rapport au poids total du système de fixation).

10. Système de fixation selon l'une des revendications 1 à 9, **caractérisé en ce que** le composant (B) est présent par rapport au composant (A) dans un rapport compris dans une plage allant de 0,5 à 10 % (par rapport au poids total du système de fixation).

11. Système de fixation selon l'une des revendications 1 à 10, **caractérisé en ce que** le rapport pondéral entre l'au moins un peroxyde selon le composant (B) et la somme du poids de l'au moins un benzoate selon le composant (B) et éventuellement de l'au moins une charge selon le composant (F) mélangée avec l'au moins un benzoate est de l'ordre de 1:1.

12. Utilisation d'un système de fixation selon l'une des revendications 1 à 11 pour introduire des moyens d'ancrage dans des trous ou interstices, en particulier dans des trous de forage et/ou des trous de béton, comme goujon chimique, comme fixation chimique de moyens d'ancrage, comme adhésif dans la technique de fixation et/ou comme masse de mortier pour la fixation de moyens d'ancrage.

13. Procédé de fixation de moyens d'ancrage dans des trous ou interstices, en particulier dans des trous de forage et/ou des trous à béton, **caractérisé en ce qu'**au moins un système de fixation selon l'une des revendications 1 à 11 et au moins un moyen d'ancrage sont introduits dans un trou ou un interstice, dans lequel les composants (A) et (B) et les composants supplémentaires éventuels sont mélangés et/ou sont mis en contact les uns avec les autres puis un durcissement du système de fixation a lieu.

14. Utilisation d'au moins un benzoate choisi parmi le dibenzoate d'éthylène glycol et le dibenzoate de diéthylène glycol pour la fabrication d'un système de fixation selon l'une des revendications 1 à 11.
